# EUROPÄISCHE PATENTSCHRIFT

(11) **EP 1 910 116 B1**
(45) Veröffentlichungstag und Bekanntmachung des Hinweises auf die Patenterteilung: **15.06.2011**
(21) Anmeldenummer: 06761787.8
(22) Anmeldetag: 12.07.2006
(51) Int. Cl.: B60J 7/185

(54) **CABRIOLET-FAHRZEUG MIT EINEM IM ABGELEGTEN ZUSTAND SICHERBAREN DACH**
CABRIOLET HAVING A ROOF WHICH CAN BE SECURED IN THE STORED POSITION
VEHICULE CABRIOLET POURVU D'UN TOIT POUVANT ETRE BLOQUE A L'ETAT RABATTU

(30) Priorität: 21.07.2005 DE 102005034722
(43) Veröffentlichungstag der Anmeldung: 16.04.2008
(73) Patentinhaber: Wilhelm Karmann GmbH, 49084 Osnabrück (DE)
(72) Erfinder: HESELHAUS, Udo, 49479 Ibbenbüren (DE)
(74) Vertreter: Kronthaler, Schmidt & Coll.
(86) Internationale Anmeldenummer: PCT/DE2006/001201
(87) Internationale Veröffentlichungsnummer: WO 2007/009431

(56) Entgegenhaltungen:
- DE-C1- 19 635 869
- DE-U1- 29 923 089
- US-A- 5 058 939

## Beschreibung

Die Erfindung betrifft ein Cabriolet-Fahrzeug mit einem im rückwärtigen Fahrzeugbereich ablegbaren und durch zumindest einen Halter in dieser Stellung sicherbaren Dach nach dem Oberbegriff des Anspruchs 1.

Die DE 196 35 869 C1 oder US 5058 939 A1 zeigt ein Cabriolet-Fahrzeug mit einem Dach, dessen Dachspitze bei geöffnetem Dach ungewendet verbleibt. Die bei geschlossenem Dach in den Windschutzscheibenrahmen eingreifenden Zentrierzapfen treffen dabei während des Absenkens des Daches auf einen Hebel eines Schwenkhalters auf. Dem Hebel ist beabstandet hierzu ein oberer Niederhalter zugeordnet. Beim Abwärtsschwenken des Schwenkhalters wird der Zentrierzapfen zwischen dem Hebel und dem Niederhalter eingefasst und somit von dem Halter gesichert. Eine derartige Konstruktion erfordert eine große Hebelausdehnung und gestattet nur geringe Bewegungstoleranzen der Zentrierungszapfen wie auch der Halter während der Dachbewegung, da ansonsten ein Fangen der Zentrierzapfen durch die Halter nicht ordnungsgemäß stattfinden kann. Die gleichzeitige Bewegung der Halter und des Daches verkompliziert dabei den Bewegungsablauf; ein Synchronisationsgestänge ist erforderlich, um die Bewegungen zu koordinieren und eine Kollision zwischen Halter und Zentrierzapfen in der Bewegung zuverlässig zu vermeiden.

Der Erfindung liegt das Problem zugrunde, bei einem gattungsgemäßen Cabriolet-Fahrzeug hier eine Verbesserung zu erreichen.

Die Erfindung löst dieses Problem durch ein Cabriolet-Fahrzeug mit den Merkmalen des Anspruchs 1. Hinsichtlich vorteilhafter Ausgestaltungen der Erfindung wird auf die weiteren Ansprüche 2 bis 9 verwiesen.

Dadurch, dass erfindungsgemäß der Halter zweigeteilt ist in eine untere Auflagefläche und einen zur Sicherung den Zentrier- oder Verriegelungsteil von oben übergreifenden Niederhalter, können beide Teile des Halters unabhängig voneinander bewegbar sein und somit ohne reibende Relativbewegung mit Zentrier- oder Verriegelungsteilen kollisionsvermeidende Bewegungen durchführen. Die Dachspitze kann damit weit vorne im Verdeckkasten liegen, so dass dieser nur eine geringe Tiefe im Fahrzeug aufweisen muss.

Insbesondere können sowohl die Auflagefläche als auch der Niederhalter beweglich sein, so dass nicht nur der Niederhalter zum Abheben des Zentrier- oder Verriegelungsteils zu öffnen ist, sondern auch die Auflagefläche raumsparend plaziert werden und den Durchtritt von Dachteilen ermöglichen kann. Die Auflagefläche kann dabei besonders vorteilhaft während des Dachschließens aus dem Bewegungsraum von Dachteilen mit einer in Fahrtrichtung gewandten Komponente herausbewegbar sein.

Sofern die Auflagefläche während der Dachbewegung von diesem zwangsbeweglich ist, wird hierfür kein eigener Antrieb benötigt.

Der Niederhalter kann vorteilhaft bei in geöffneter Stellung ruhendem Dach auf- und zubeweglich sein und somit jede Kollisionsgefahr mit bewegten Teilen des Daches vermeiden.

Weitere Vorteile und Merkmale der Erfindung ergeben sich aus einem in der Zeichnung schematisch dargestellten und nachfolgend beschriebenen Ausführungsbeispiel des Gegenstandes der Erfindung.

In der Zeichnung zeigt:
- Fig. 1: eine teilweise abgebrochene, schematische Sei- tenansicht eines erfindungsgemäßen Cabriolet- Fahrzeugs bei geschlossenem Dach mit gestrichelt eingezeichneter Rückwand des Insassenraums und strichpunktiert eingezeichnetem Verdeckkasten,
- Fig. 2: eine Einzelteilansicht des Details II in Fig. 1,
- Fig. 3: eine schematische Ansicht der von der Karosserie verdeckten Mechanik zur Halterung des geöffneten Daches, etwa im Ausschnitt III in Fig. 1 gele- gen, bei geöffnetem und gesichertem Dach,
- Fig. 4: eine ähnliche Ansicht wie Fig. 3 bei aufge- schwenktem Niederhalter und noch von der Aufla- gefläche unbewegt abgestütztem Dach,
- Fig. 5: eine ähnliche Ansicht wie Fig. 4 während der be- ginnenden Schließbewegung des Daches und gleich- zeitig nach vorne schwenkender Auflagefläche,
- Fig. 6: eine ähnliche Ansicht wie Fig. 5 bei weiter schließendem Dach und weiter nach vorne schwen- kender Auflagefläche, die hier von einem in Öff- nungsstellung des Daches weiter unten im Ver- deckkasten gelegenen Dachspriegel passiert wird,
- Fig. 7: eine ähnliche Ansicht wie Fig. 6 bei geschlos- senem Dach und in entsprechender Endstellung eingezeichnetem Halter, wobei die gegenteilige Endstellung der Auflagefläche bei geöffnetem Dach gestrichelt mit eingezeichnet ist.

Das in der Zeichnung nur schematisch dargestellte Cabriolet-Fahrzeug 1 umfasst ein bewegliches Dach 2, das in seinem geöffneten Zustand im heckwärtigen Karosseriebereich in zum Beispiel einem Verdeckkasten 3 ablegbar ist. Das Dach 2 kann unterschiedlich ausgebildet sein und insgesamt oder teilweise starre Dachteile umfassen und/oder auch mit einem Bezug versehen sein (sog. Softtop).

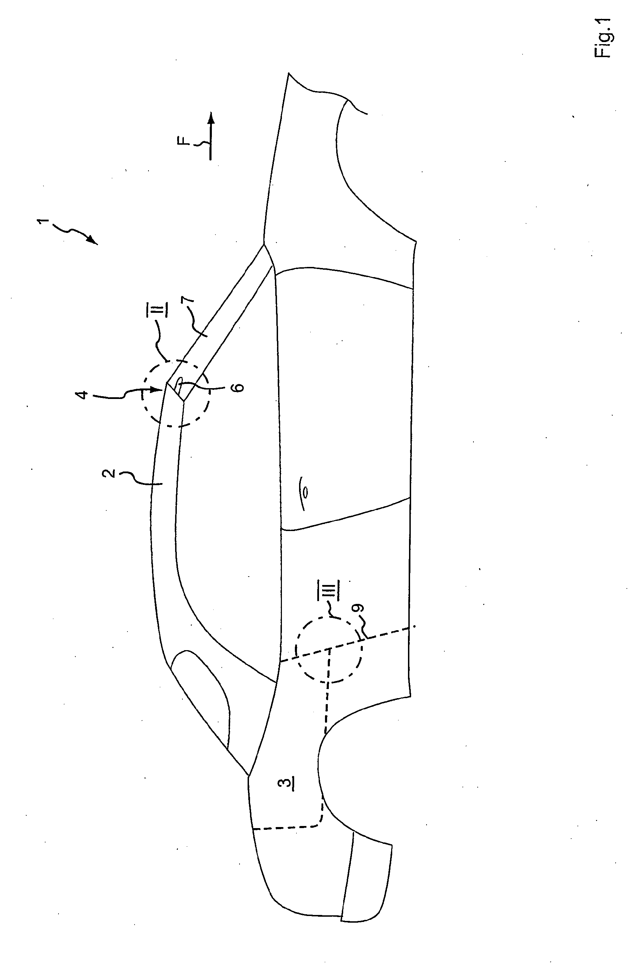

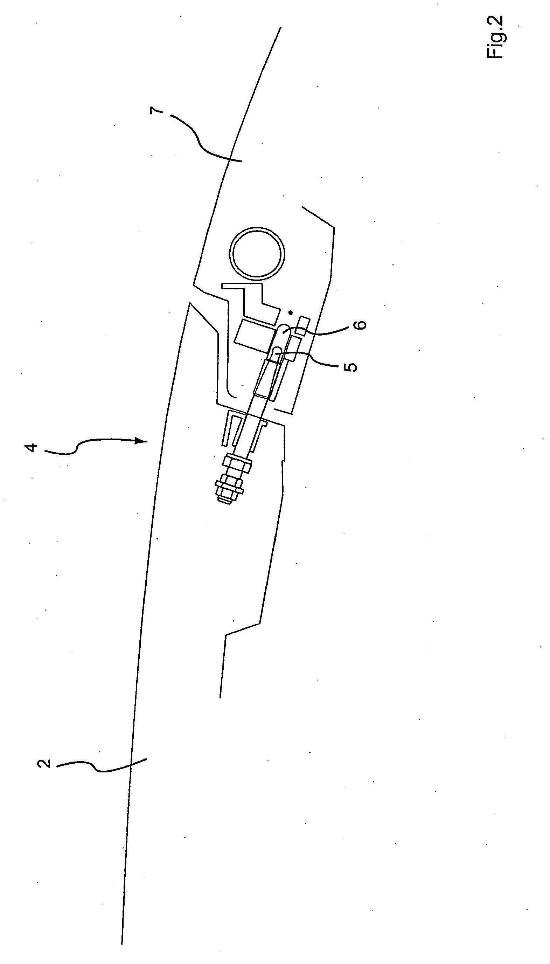

In jedem Fall ist ein vorderer Dachbereich 4, der häufig auch als Dachspitze bezeichnet wird, unabhängig davon, ob auch dieser Bereich von einem Bezug übergriffen ist, starr ausgebildet. Über Eingriffsorgane, hier über getrennte Verriegelungsorgane 5 und Zentrierzapfen 6 ist das geschlossene Dach 2 (Fig. 1, Fig. 2) mittelbar oder unmittelbar an einem Windschutzscheibenrahmen 7 sicherbar.

Hier sind an beiden Fahrzeugquerseiten jeweils Hakenteile 5 und Zentrierzapfen 6 vorgesehen; es sind jedoch verschiedene Konstellationen möglich.

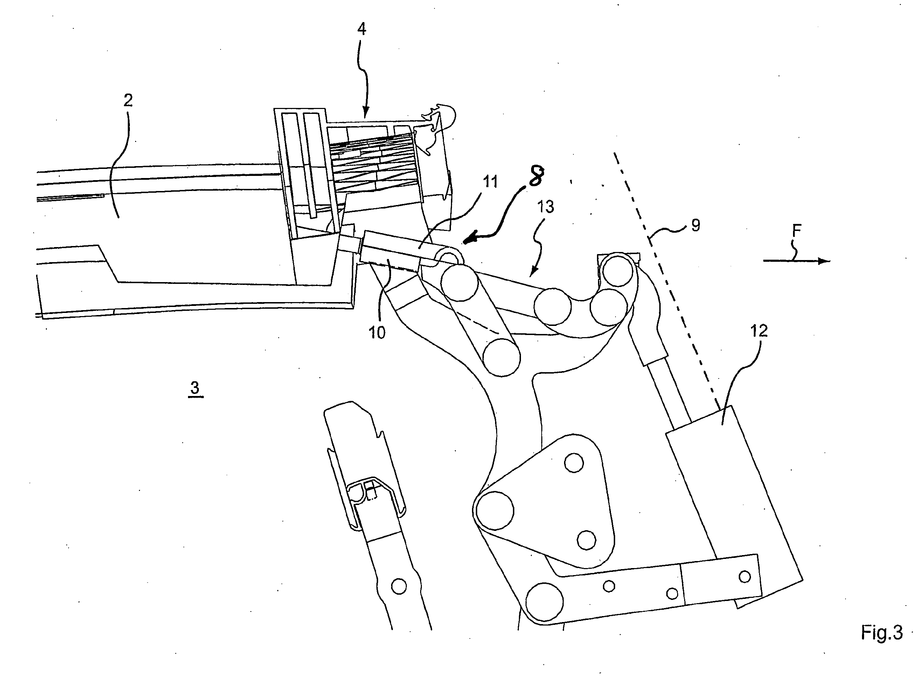

Der vordere Dachbereich 4 verbleibt bei seiner Öffnung ungewendet und wird in gleicher Orientierung in geöffneter Dachstellung abgelegt (Fig. 3), weist also auch hier in Fahrtrichtung F nach vorne. Bei einem Softtop kann dies etwa durch eine sog. Z-Faltung bewirkt sein. In dieser abgelegten Dachstellung müssen die Eingriffsorgane 5, 6 ebenfalls nicht funktionslos sein, sondern ein insgesamt mit 8 bezeichneter Halter kann an einem Teil des Verschlusses - hier gezeigt: am Zapfen 6 - angreifen und damit eine Lagesicherung des abgelegten Daches 2, insbesondere gegen eine Aufwärtsbewegung, etwa bei Überfahren von Fahrbahnunebenheiten, bewirken.

Der Halter 8 ist an einer Rückwand 9, die den Insassenraum von dem Verdeckkasten 3 abtrennt, angeordnet. Im Ausführungsbeispiel sind zwei in Fahrzeugquerrichtung zueinander beabstandete Halter 8 vorgesehen, die in Verriegelungsstellung auf seitlich an der Dachspitze angeordnete Zentrierzapfen 6 einwirken.

Die Halter 8 ist hier zweigeteilt und umfasst eine untere Auflagefläche 10 und einen oberen, separat beweglichen Niederhalter 11, der zur Sicherung des Daches 2 von oben auf den auf der Auflagefläche 10 liegenden Zentrierzapfen 6 bei geöffnetem und unbewegtem Dach 2 bewegbar ist. Im Ausführungsbeispiel ist hierfür eine von dem Zusatzantrieb 12, etwa einem Hydraulikzylinder, über das Getriebe 13 vermittelte Schwenkbewegung ausführbar.

Niederhalter 11 und Auflagefläche 10 weisen jeweils einen konkaven, im wesentlichen halbrunden Querschnitt auf und fügen sich in Sicherungsstellung (Fig. 3) hülsenartig um den eingefassten Zentrierzapfen 6 des Daches 2 zusammen, so dass sie diesen in jeder Richtung unverrückbar halten können.

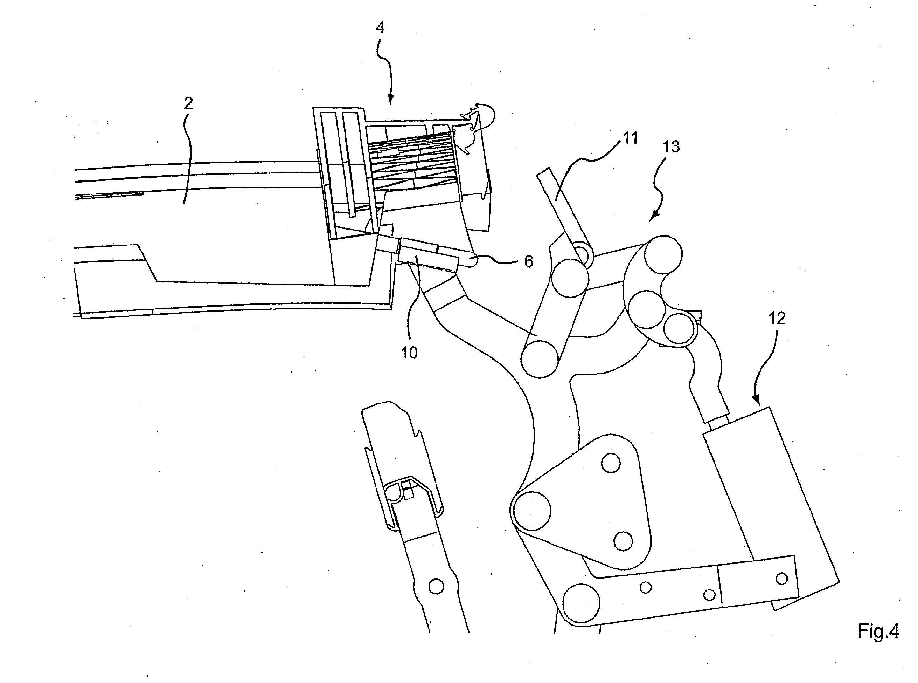

Beide Teile 10, 11 des Halters 8 sind einzeln beweglich. Um eine Freigabe des geöffneten Daches 2 aus der Sicherungsstellung und damit dessen Schließbewegung zu ermöglichen, schwenkt zunächst der Niederhalter 11 über seinen Antrieb 12 auf, so dass für den Zapfen 6 des zunächst noch unbewegten Daches 2 (Fig. 4) eine nach oben freie Bewegungsbahn eröffnet ist. Der Zentrierzapfen 6 ruht währenddessen in der ebenfalls noch unbewegten Auflagefläche 10.

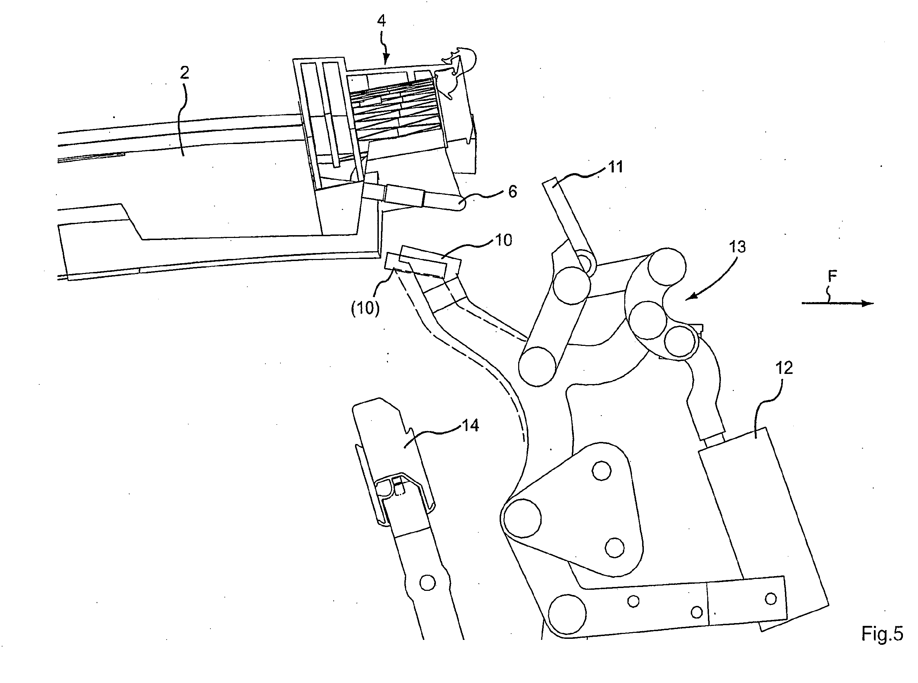

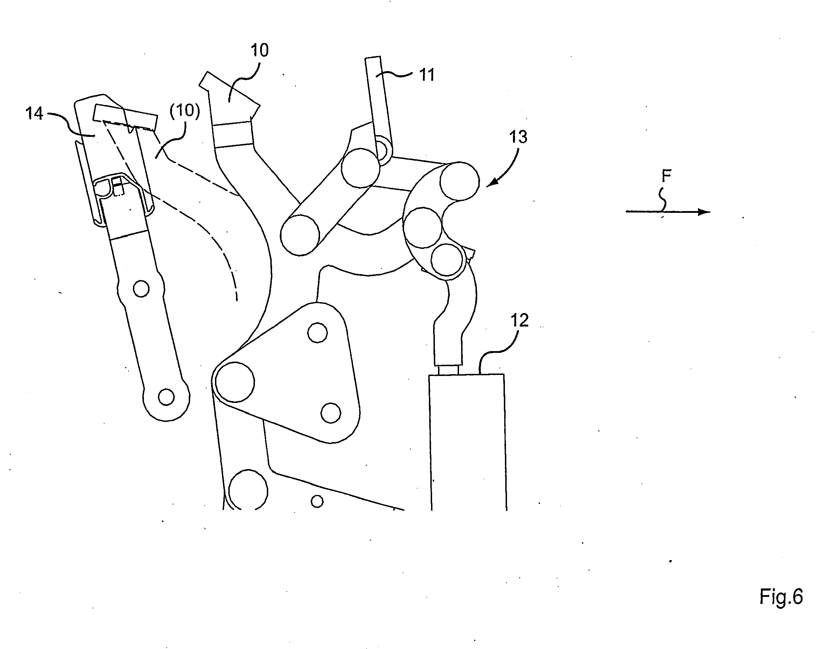

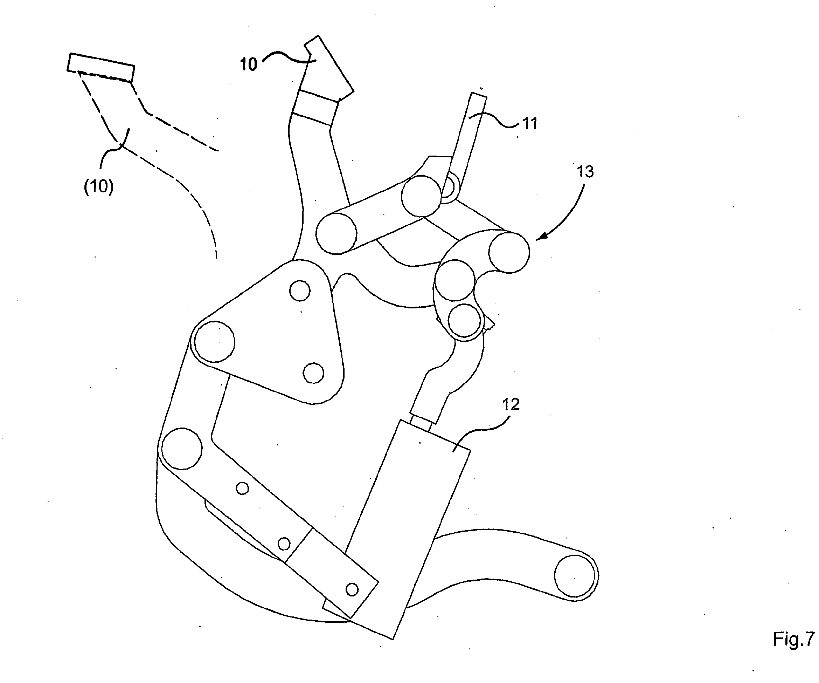

Im Ausführungsbeispiel schwenkt im weiteren zusammen mit dem sich aufwärts bewegenden Dach 2 die Auflagefläche 10 mit einer Komponente in Fahrtrichtung F nach vorne (Fig. 5 ff.) und vergrößert damit im Nahbereich der Rückwand 9 den Durchtrittsraum für unter dem vorderen Dachende gepackt liegende weitere Teile des Daches 2, hier zum Beispiel einen Spriegel 14. Das Dach 2 kann daher in seiner abgelegten Stellung sehr weit an die Rückwand 9 heranrücken und so eine optimierte Ausnutzung des Verdeckkastens 3 ermöglichen. Die Stellung der Auflagefläche 10 bei geöffnetem Dach ist in den Figuren 5 bis 7 jeweils gestrichelt mit eingezeichnet, um die Bewegung zu verdeutlichen. Auch andere Bewegungen als eine Schwenkbewegung sind möglich. In jedem Fall ist bei einer Beweglichkeit der Auflagefläche 11 diese mit einer Komponente in Fahrtrichtung aus dem Bewegungsraum des Daches 2 heraus bewegbar.

Die Bewegung der Auflagefläche 10 ist hier mit der Bewegung des Daches 2 gekoppelt, so dass erstere zwangsweise mit dem Dach 2 mitbewegt wird und eine Kollision der Teile 14, 10 ausgeschlossen ist. Dennoch bedarf es hierzu weder eines eigenen Antriebs oder einer eigenen Steuerung, noch ist eine reibende Relativbewegung zwischen Teilen des Daches 2 und Teilen des Halters 8 erforderlich. Der Verschleiß ist somit minimiert.

## Patentansprüche

1. Cabriolet-Fahrzeug (1) mit einem im rückwärtigen Fahrzeugbereich ablegbaren Dach (2), das zumindest einen starren vorderen Bereich (4) umfasst, der in geschlossener Dachstellung am Windschutzscheibenrahmen (7) verriegelbar und in geöffneter Dachstellung ungewendet ist und durch zumindest einen beweglichen Halter (8) sicherbar ist, der mit Zentrier- oder Verriegelungsteilen (5;6) an dem vorderen Dachende (4) zusammenwirkt,
**dadurch gekennzeichnet,**
**dass** der Halter (8) zumindest zweigeteilt ist in eine untere Auflagefläche (10) und einen zur Sicherung den Zentrier- oder Verriegelungsteil (5;6) von oben übergreifenden Niederhalter (11).

2. Cabriolet-Fahrzeug (1) nach Anspruch 1,
**dadurch gekennzeichnet,**
**dass** sowohl die Auflagefläche (10) als auch der Niederhalter (11) beweglich sind.

3. Cabriolet-Fahrzeug (1) nach einem der Ansprüche 1 oder 2,
**dadurch gekennzeichnet,**
**dass** die Auflagefläche (10) während der Dachbewegung von diesem zwangsbeweglich ist.

4. Cabriolet-Fahrzeug (1) nach Anspruch 3,
**dadurch gekennzeichnet,**
**dass** die Auflagefläche (10) während des Dachschließens aus dem Bewegungsraum von Dachteilen (14) mit einer in Fahrtrichtung (F) weisenden Komponente herausbewegbar ist.

5. Cabriolet-Fahrzeug (1) nach einem der Ansprüche 1 bis 4,
**dadurch gekennzeichnet,**
**dass** der Niederhalter (11) bei geöffnetem Dach (2) auf- und zubeweglich ist.

6. Cabriolet-Fahrzeug (1) nach Anspruch 5,
**dadurch gekennzeichnet,**
**dass** die Auflagefläche (10) und der Niederhalter (11) jeweils einen konkaven Querschnitt aufweisen und sich in Sicherungsstellung zu einem hülsenartigen Körper um einen Zentrierungszapfen (6) legen.

7. Cabriolet-Fahrzeug (1) nach einem der Ansprüche 1 bis 6,
**dadurch gekennzeichnet,**
**dass** der Halter (8) motorisch verlagerbar ist.

8. Cabriolet-Fahrzeug (1) nach einem der Ansprüche 1 bis 7,
**dadurch gekennzeichnet,**
**dass** der Halter (8) an einer Rückwand (9), die den Insassenraum von einem Verdeckkasten (3) abtrennt, angeordnet ist.

9. Cabriolet-Fahrzeug (1) nach einem der Ansprüche 1 bis 8,
**dadurch gekennzeichnet,**
**dass** zwei in Fahrzeugquerrichtung zueinander beabstandete Halter (8) vorgesehen sind, die in Verriegelungsstellung auf seitlich an der Dachspitze (4) angeordnete Zentrierzapfen (6) einwirken.

## Claims

1. A convertible vehicle (1) with a roof (2) that can be stowed in the back of the vehicle, said roof (2) comprising at least one rigid front area (4) which can be latched onto the windscreen frame (7) in the closed roof position and which is not reversed in the open roof position and can be secured by at least one displaceable holder (8) cooperating with centring or latching parts (5; 6) on the roof front-end (4),
**characterised in that** the holder (8) is divided into at least two parts, a lower bearing surface (10) and a hold-down element (11) engaging the centring or latching parts (5; 6) from above in order to secure them.

2. The convertible vehicle (1) according to claim 1, **characterised in that** both the bearing surface (10) and the hold-down element (11) are displaceable.

3. The convertible vehicle (1) according to any one of claims 1 or 2, **characterised in that** the bearing surface (10) can be urged to move by the roof during the roof movement.

4. The convertible vehicle (1) according to claim 3, **characterised in that**, during the closing of the roof, the bearing surface (10) can be moved out of the range of motion of roof parts (14) with a component pointing in the direction of travel (F).

5. The convertible vehicle (1) according to any one of claims 1 to 4, **characterised in that** the hold-down element (11) can be moved to open and close when the roof (2) is opened.

6. The convertible vehicle (1) according to claim 5, **characterised in that** the bearing surface (10) and the hold-down element (11) each have a concave cross-section and together form a sleeve-like body around a centring pin (6) in the securing position.

7. The convertible vehicle (1) according to any one of claims 1 to 6, **characterised in that** the holder (8) is motor-displaceable.

8. The convertible vehicle (1) according to any one of claims 1 to 7, **characterised in that** the holder (8) is arranged on a rear wall (9) which separates the passenger compartment from a roof storage compartment (3).

9. The convertible vehicle (1) according to any one of claims 1 to 8, **characterised in that** two holders (8) are provided, which are spaced apart in the transverse vehicle direction and, in the latching position, act on centring pins (6) disposed laterally on the roof front-end (4).

## Revendications

1. Véhicule cabriolet (1) avec un toit (2) qui peut être rangé à l'arrière du véhicule, ledit toit (2) comprenant au moins une partie avant rigide (4), que l'on peut verrouiller sur le cadre de pare-brise (7) en position fermée du toit et qui, en position ouverte du toit, n'est pas retournée et peut être fixée par au moins un détenteur déplaçable (8) coopérant avec des éléments de centrage ou de verrouillage (5; 6) à l'extrémité avant (4) du toit,
**caractérisé en ce que** le détenteur (8) est divisé en au moins deux parties, à savoir une surface d'appui inférieure (10) et un serre-flan (11) s'engrenant de haut dans les éléments de centrage ou de verrouillage (5; 6) pour les fixer.

2. Véhicule cabriolet (1) selon la revendication 1, **caractérisé en ce que** la surface d'appui (10) et le serre-flan (11) sont déplaçables.

3. Véhicule cabriolet (1) selon l'une quelconque des revendications 1 ou 2, **caractérisé en ce que** la surface d'appui (10) peut être soumise à un déplacement forcé par le toit lors du déplacement du toit.

4. Véhicule cabriolet (1) selon la revendication 3, **caractérisé en ce que**, lors du fermeture du toit, la surface d'appui (10) peut être sortie de la zone de mouvement d'éléments de toit (14) avec une composante orientée dans la direction de marche (F).

5. Véhicule cabriolet (1) selon l'une quelconque des revendications 1 à 4, **caractérisé en ce que** l'on peut ou bien ouvrir ou bien fermer le serre-flan (11) lorsque le toit (2) est ouvert.

6. Véhicule cabriolet (1) selon la revendication 5, **caractérisé en ce que** la surface d'appui (10) et le serre-flan (11) sont concaves en section transversale et constituent ensemble une sorte de douille entourant un pion de centrage (6) dans la position de fixation.

7. Véhicule cabriolet (1) selon l'une quelconque des revendications 1 à 6, **caractérisé en ce que** le détenteur (8) est déplaçable par un moteur.

8. Véhicule cabriolet (1) selon l'une quelconque des revendications 1 à 7, **caractérisé en ce que** le détenteur (8) est disposé sur une paroi arrière (9) séparant l'habitacle d'un caisson de capote (3).

9. Véhicule cabriolet (1) selon l'une quelconque des revendications 1 à 8, **caractérisé en ce que** l'on prévoit deux détenteurs (8) espacés l'un de l'autre en direction transversale du véhicule et agissant, en position de verrouillage, sur des pions de centrage (6) disposés latéralement à l'extrémité avant (4) du toit.
